# EUROPEAN PATENT APPLICATION

(11) **EP 3 647 832 A1**
(43) Date of publication of application: **06.05.2020**
(21) Application number: 18824997.3
(22) Date of filing: 26.06.2018
(51) Int. Cl.: G02B 3/00, G02B 3/08

(54) **LENS PRODUCTION METHOD**

(30) Priority: 27.06.2017 JP 2017125298
(71) Applicant: Daicel Corporation, Osaka-shi, Osaka 530-0011 (JP)
(72) Inventor: FUKUI, Sadayuki, Himeji-shi Hyogo 671-1283 (JP); FUJIKAWA, Takeshi, Himeji-shi Hyogo 671-1283 (JP)
(74) Representative: Grünecker Patent- und Rechtsanwälte PartG mbB
(86) International application number: PCT/JP2018/024241
(87) International publication number: WO 2019/004227

(57) **Abstract**

Provided is a method for efficiently producing a lens with high accuracy and excellent optical properties. The method for producing a lens of the present invention includes cutting an array of lenses at a junction by a method below, the array of lenses fixed on a support tape and having a configuration wherein two or more lenses are two-dimensionally arranged, and these lenses are connected each other via the junction. Cutting method: advancing a cutting depth from the side opposite to the side adhered to the support tape to a range from 50% or greater and 99.9% or less of a thickness of the junction, temporarily stopping the advance of the cutting depth when the advance reaches the range, and then cutting the junction to a cutting depth of 100%.

## Description

### Technical Field

The present invention relates to a method for producing an individualized lens by cutting an array of lenses at a junction in a state that the array of lenses is fixed on a support tape, the array of lenses having a configuration wherein two or more lenses are two-dimensionally arranged, and these lenses are connected each other via the junction. The present application claims priority to JP 2017-125298 filed to Japan on June 27, 2017, which content is incorporated herein.

### Background Art

In recent years, there has been a demand for mobile electronic devices, such as mobile phones and smartphones, to improve product value by mounting an optical component, such as a sensor or a camera. In addition, such products have been reduced in size and thickness year by year, and smaller and thinner components are also required to be used therefor.

Accordingly, a method for efficiently producing a small thin lens has been employed, wherein the lens is produced by producing an array of lenses having a configuration in which two or more small thin lenses are two-dimensionally arranged, and these lenses are connected each other via a junction; and dicing these lenses. However, cut chips are easily fixed or adhered to the lens because of heat or static electricity generated during dicing, and the cut chips once fixed or adhered thereto are difficult to remove by water washing or the like, causing a problem of reducing optical properties of the lens due to the cut chips.

Patent Document 1 describes destaticizing and hydrophilizing an array of lenses, and then dicing the lenses while washing them with water, thereby preventing the adhesion of the cut chips to the lenses.

### Citation List

### Patent Document

Patent Document 1: JP 2013-003 541 A

### Summary of Invention

### Technical Problem

However, in a case where the lens is hydrophilized, the lens easily absorbs water, as such the lens absorbs water and expands during the water washing, and this can reduce the accuracy of the shape of the resulting lens and also impair the optical properties thereof.

Accordingly, an object of the present invention is to provide a method for efficiently producing a lens with high accuracy and excellent optical properties.

### Solution to Problem

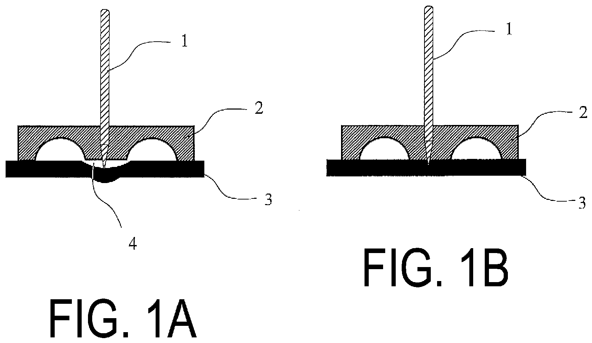

As a result of diligent research to solve the above problems, the present inventors found the following. In attempting to cut lenses fixed by adhering them to a support tape without stop using a blade or the like, the thrust force that the blade or the like has upon reaching the support tape is very large, and the support tape is pushed by the thrust force in a direction that the support tape is peeled from the lens. Thereby a gap is formed between the lens and the support, and cut chips tend to enter from the gap and adhere to the lens surface (FIG. 1A). On the other hand, instead that the lenses are cut without stop, if the cutting operation is temporarily stopped or advance of a cutting depth is temporarily stopped in a state that a slight uncut portion is left, and the cutting operation is resumed to cut the uncut portion after the thrust force that the blade or the like has had is relieved, the thrust force that the blade or the like has had upon reaching the support tape can be reduced to an extremely small level, and this can suppress formation of a gap between the support tape and the lenses when the blade or the like reaches the support tape (FIG. 1B). This can prevent cut chips from entering and adhering to the lens surface and provides a lens having high optical properties. In addition, it is not necessary to hydrophilize the lens, and this can prevent expansion of the lens due to water absorption even if the lens is water-cooled or water-washed. The present invention has been completed based on these findings.

That is, the present invention provides a method for producing a lens, the method including cutting an array of lenses at a junction by a method below, the array of lenses fixed on a support tape and having a configuration wherein two or more lenses are two-dimensionally arranged, and these lenses are connected each other via the junction.

Cutting method: advancing a cutting depth from the side opposite to the side adhered to the support tape to a range of 50% or greater and 99.9% or less of a thickness of the junction, temporarily stopping the advance of the cutting depth when the advance reaches the range, and then cutting the junction to a cutting depth of 100%.

The present invention also provides the method for producing a lens, wherein the array of lenses is cut while being water-cooled.

The present invention also provides the method for producing a lens, wherein the array of lenses is adhered to the support tape at the junction of the lenses; a diameter of the lens is from 1 to 5 mm; and a width of the junction is 1 mm or less.

The present invention also provides the method for producing a lens, wherein the support tape has an adhesive force from 3 to 20 N/25 mm, and the adhesive force is reduced or eliminated by applying ultraviolet irradiation or heat treatment.

The present invention also provides the method for producing a lens, wherein the array of lenses is cut using a blade rotating at high speed.

The present invention also provides the method for producing a lens, wherein a curable composition is molded using a mold and then cured to provide an array of lenses formed of a cured product of the curable composition, and the resulting array of lenses is fixed on the support tape and cut.

The present invention also provides the method for producing a lens, wherein a fracture strain (JIS-K7162: 1994) of the array of lenses is from 0.1 to 30%.

The present invention also provides the method for producing a lens, wherein the lens is a microlens, a Fresnel lens, a molded product formed of a plurality of microlenses or Fresnel lenses bonded via a junction, a lenticular lens, or a prism sheet.

### Advantageous Effects of Invention

In an embodiment of the present invention, a lens is produced according to the above method, and thus this can suppress the formation of a gap between the support tape and the lens when a blade or the like reaches the support tape. Thus, this can suppress the entering and adhering of cut chips to the lens surface and provides a lens having high optical properties. In addition, it is not necessary to hydrophilize the lens, and thus this can suppress the reductions in accuracy and optical properties due to the hydrophilization treatment on the lens.

Thus, according to the present invention, a small thin lens with excellent optical properties can be produced accurately and efficiently.

The method for producing a lens according to the present invention is suitable as a method for producing a lens for a sensor of a mobile electronic device, such as a mobile phone and a smartphone; and a lens for a camera.

### Brief Description of Drawings

FIG. 1A is a schematic view when lenses adhered to a support tape were cut without stop, and thereby floating has occurred.
FIG. 1B is a schematic view when lenses adhered to a support tape were cut stepwise with a temporary stop, and thereby floating has not occurred.

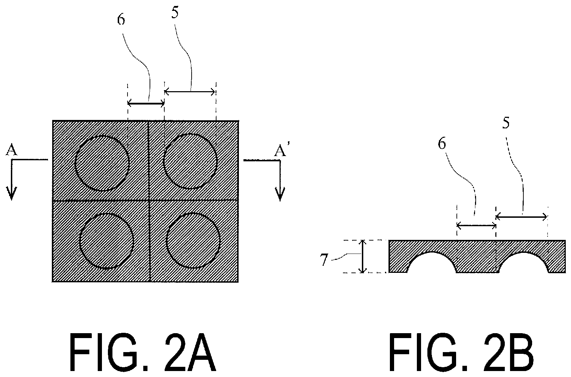

FIG. 2A is a schematic plan view illustrating an example of an array of lenses according to an embodiment of the present invention.
FIG. 2B is a schematic cross-sectional view illustrating an example of an array of lenses according to an embodiment of the present invention cut at a position A-A' in the plan view of FIG. 2A.
FIG. 3 is a schematic view illustrating an array of microlenses fixed on a support tape in the examples.
FIG. 3A is a schematic plan view illustrating an individualized piece (microlens) obtained by cutting the array of microlenses in FIG. 3.
FIG. 3B is a schematic cross-sectional view illustrating an individualized piece (microlens) obtained by cutting the array of microlenses in FIG. 3.

### Description of Embodiments

### Method for producing lens

A method for producing a lens according to an embodiment of the present invention includes cutting an array of lenses at a junction by a method below (= cutting), the array of lenses being fixed on a support tape and having a configuration wherein two or more lenses are two-dimensionally arranged, and these lenses are connected each other via the junction.

Cutting method: advancing a cutting depth from the side opposite to the side adhered to the support tape to a range from 50% or greater and 99.9% or less of a thickness of the junction, temporarily stopping the advance of the cutting depth when the advance reaches the range, and then cutting the junction to a cutting depth of 100%.

### Cutting

The cutting in an embodiment of the present invention is for cutting the array of lenses at the junction to individualize the lenses and characterized by cutting the array of lenses by advancing a cutting depth from the side opposite to the side adhered to the support tape to a range from 50% or greater and 99.9% or less of a thickness of the junction, temporarily stopping the advance of the cutting depth when the advance reaches the range, and then cutting the junction to a cutting depth of 100%. Further, in the cutting in an embodiment of the present invention, the operation of stopping the advance of the cutting depth is required to be performed at least once or can be performed twice or more in a range from 50% or greater and 99.9% or less of the thickness of the junction.

According to the "cutting depth" in the present specification, the depth of the cutting start point at the site to be cut (specifically the junction of the array of lenses) is 0%, and the depth at which the cutting is completed is 100%.

The array of lenses has a configuration wherein two or more lenses are two-dimensionally arranged, and these lenses are connected each other via a junction. The diameter of the lens is, for example, from 1 to 5 mm. In addition, a width of the junction is, for example, 1 mm or less, preferably from 0.05 to 1 mm, and particularly preferably from 0.05 to 0.5 mm, and a thickness of the junction is, for example, from 0.1 to 1.5 mm.

Examples of the lens include a microlens, a Fresnel lens, a molded product formed of a plurality of microlenses or Fresnel lenses bonded via a junction, a lenticular lens, and a prism sheet. In addition, the lens includes a lens for a sensor of a mobile electronic device, such as a mobile phone and a smartphone; and a lens for a camera.

The fracture strain of the array of lenses [more particularly, the fracture strain of the material constituting the array of lenses (for example, a cured product of a curable composition described below)] is, for example, 0.1% or greater, preferably 0.3% or greater, and particularly preferably 0.5% or greater. Further, the upper limit of the fracture strain is, for example, 30%, preferably 20%, particularly preferably 10%, most preferably 5%, and especially preferably 3%. Furthermore, the fracture strain can be measured in accordance with JIS-K7162: 1994 using a test piece 5B mold. The array of lenses with a fracture strain out of the above range, even if the cutting method according to an embodiment of the present invention is applied, may have difficulty in suppressing formation of a gap between the support tape and the lens when a blade or the like reaches the support tape, and it may be difficult to provide an effect of suppressing reduction in optical properties of the lens. In addition, the lens with too small fracture strain may become brittle and may be chipped or cracked during handling.

The array of lenses is adhered to the support tape at the junction of the lenses and fixed thereon. In addition, in an embodiment of the present invention, the lenses are cut by the above method, and thus even if the adhesive area with the support tape is small, or the lenses are not hydrophilized, the formation of a gap between the support tape and the lens can be suppressed when a blade or the like reaches the support tape, and this can suppress the reduction in optical properties of the lens due to the adhesion of cut chips to the lens surface, the cut chips having entered from the gap.

The timing to stop the advance of the cutting depth is when the cutting depth is advanced to a range from 50% or greater and 99.9% or less of the thickness of the junction, and the lower limit of the cutting depth is, among them, preferably 60%, more preferably 70%, particularly preferably 80%, most preferably 85%, and especially preferably 90% in that the thrust force that a blade or the like has upon reaching the support tape can be made extremely small. In addition, the upper limit is preferably 99%.

Further, the timing to stop the advance of the cutting depth is preferably when the thickness of the uncut portion of the junction reaches any one point in a range of, for example, preferably 1 µm or greater, more preferably 2 µm or greater, particularly preferably 3 µm or greater, and most preferably 5 µm or greater. Furthermore, the timing to stop the advance of the cutting depth is preferably when the thickness of the uncut portion of the junction reaches any one point in a range of, for example, preferably 50 µm or less, and among them, more preferably 40 µm or less, particularly preferably 30 µm or less, and most preferably 25 µm or less in that the thrust force that a blade or the like has upon reaching the support tape can be made extremely small.

In an embodiment of the present invention, the advance of the cutting depth is temporarily stopped at the timing when the cutting depth or the thickness of the uncut portion of the junction is in the above range, and thus the thrust force that a blade or the like has upon reaching the support tape can be reduced to an extremely small level, and the formation of a gap between the support tape and the lens being caused by the thrust force can be suppressed or prevented.

After the advance of the cutting depth is temporarily stopped, the timing to resume the advance of the cutting depth (or the time to stop the advance of the cutting depth) is preferably when the thrust force that a blade or the like has is relieved, and the time to stop the advance of the cutting depth is, for example, 1 second or longer, preferably 3 seconds or longer, particularly preferably 5 seconds or longer, and most preferably 10 seconds or longer. Further, the upper limit is not particularly limited, but it is not preferred to stop the advance for a long time because it decreases the operating efficiency.

The cutting means of the array of lenses is not particularly limited, and well-known and commonly used means can be employed, but among others, a blade rotating at high speed is preferably used to perform the cutting.

In cutting using a blade rotating at high speed, the rotation speed of the blade is, for example, approximately from 10000 to 50000 rpm. In addition, the advance speed of the blade (i.e., the advance speed of the cutting depth) is approximately from 10 to 200 mm/sec.

Furthermore, when the array of lenses is cut using such as a blade rotating at high speed, frictional heat is generated, and thus it is preferred to cut the array of lenses while cooling in terms of being able to suppress deformation of the lens and reduction in optical properties due to the frictional heat. In an embodiment of the present invention, in particular, it is preferred to perform the array of lenses while water-cooling in terms of being able to remove the frictional heat and concurrently wash away the cut chips, and thereby further reduce the risk of adhesion of cut chips.

The array of lenses is cut in a fixed state on the support tape. It is preferred to use a re-peelable adhesive tape that can be peeled off when it becomes unnecessary in terms of being able to release the resulting lens from the support tape without damage. Examples of the re-peelable adhesive tape include pressure-sensitive adhesive tapes and adhesive tapes having moderate adhesive force before heat treatment or ultraviolet irradiation is performed (adhesive force of, for example, 3 N/25 mm or greater, preferably 4 N/25 mm or greater, and particularly preferably 5 N/25 mm, and, for example, 20 N/25 mm or less, preferably 18 N/25 mm or less, and particularly preferably 15 N/25 mm or less) and whose adhesion is rapidly reduced or eliminated by performing heat treatment and/or ultraviolet irradiation (i.e., heat-curable adhesive tapes and UV-curable adhesive tapes). In an embodiment of the present invention, among them, a heat-curable adhesive tape or a UV-curable adhesive tape is preferably used in that the lenses can be firmly retained during cutting, the lenses can be readily released by reducing or eliminating the adhesive force when the lenses need to be released, and the damage of the lenses when released can be prevented; and in particular, a UV-curable adhesive tape is preferably used in that the lenses can be swiftly and selectively released (for example, in a case where only a specific lens of a plurality of individualized lenses is desired to be released, the lens can be selectively released by irradiating UV only to the portion of the support tape where the lens to be released is adhered).

The thickness of the adhesive agent layer of the support tape is, for example, 1 µm or greater, preferably 3 µm or greater, particularly preferably 5 µm or greater, particularly preferably 8 µm or greater, and, for example, 30 µm or less, preferably 18 µm or less, and particularly preferably 15 µm or less. The adhesive agent layer having a thickness less than the above range cannot have sufficient adhesion to fix the lens thereon, and thus the lens may be released during cutting and damaged. In addition, the adhesive agent layer having the thickness greater than the above range has elasticity, and thus the lens may be shaken by the vibration of a blade or the like during cutting, making it difficult to cut the lens accurately.

In an embodiment of the present invention, for example, commercially available dicing tapes (for example, such as "ELEP HOLDER" series available from Nitto Denko Corporation, "ADWILL" series available from Lintec Corporation, and "ELEGRIP" series available from Denka Adtecs Co., Ltd.) can be suitably used as the support tape.

When the cutting is advanced to the cutting depth of 100% after the advance of the cutting depth is resumed, a part of the thickness of the support tape may be cut together with the lens, but the support tape is preferably not cut completely. This is because if the support tape is completely cut, for example, the lens may be flown with water when it is cut while being water-cooled and damaged.

Through the cutting, a lens onto which a support tape cut to the size of the lens is adhered (more particularly, an individualized piece of lens obtained from the array of lenses, the piece including a support tape cut into the size of the lens adhered thereto, wherein the individualized piece obtained from the array of lenses includes a lens concave portion and a peripheral portion thereof) (= a lens with a cut support tape) is obtained. When the lenses are cut at the junction without cutting the support tape completely, lenses in array with a support tape wherein two or more lenses (more particularly, individualized pieces obtained from the array of lenses, the piece being a structure including a lens concave portion and a peripheral portion thereof) in a state of being two-dimensionally arranged are fixed on the support tape are obtained.

The resulting lens with a cut support tape (or the lenses in array with a support tape) is preferred in that the lens can be released by reducing or eliminating the adhesive force in a manner according to the type of the support tape, and thereby the lens can be released without damage. For example, when an adhesive tape whose adhesive force is rapidly reduced or eliminated by performing heat treatment and/or ultraviolet irradiation is used, the lens is released preferably by performing heat treatment and/or ultraviolet irradiation to reduce or eliminate the adhesive force. The lens released from the cut support tape or the support tape can be suitably used for a lens for a sensor of a mobile electronic device, such as a mobile phone and a smartphone; and a lens for a camera.

### Production of array of lenses

The array of lenses to be subjected to the above cutting is preferably one produced by molding a curable composition using a mold and then curing.

Accordingly, the method for producing a lens according to an embodiment of the present invention is preferably a method for producing a lens, the method including: molding a curable composition using a mold and then curing to obtain an array of lenses having a configuration wherein two or more lenses are two-dimensionally arranged, and these lenses are connected each other via a junction; fixing the resulting array of lenses on a support tape; and cutting the array of lenses fixed on the support tape at the junction by a method below.

Cutting method: advancing a cutting depth from the side opposite to the side adhered to the support tape to a range from 50% or greater and 99.9% or less of a thickness of the junction, temporarily stopping the advance of the cutting depth when the advance reaches the range, and then cutting the junction to a cutting depth of 100%.

The curable composition is preferably one that can be cured by performing heat treatment and/or ultraviolet irradiation to form a cured product with excellent optical properties. In an embodiment of the present invention, among others, a composition capable of forming a cured product with excellent optical properties (i.e., a photocurable composition) is preferred, a composition containing a cationic curable compound as a curable compound is particularly preferred in terms of having excellent curability, and a composition containing at least an epoxy resin as the (cationic) curable compound is most preferred in terms of having excellent curability and providing a cured product (i.e., a lens) with optical properties (in particular, transparency), high hardness, and heat resistance in combination.

As the epoxy resin, a well-known or commonly used compound having one or more epoxy groups (oxirane ring) in a molecule can be used, and examples thereof include alicyclic epoxy compounds, aromatic epoxy compounds, and aliphatic epoxy compounds. In an embodiment of the present invention, among them, in terms of being able to form a cured product with excellent heat resistance and transparency, a polyfunctional alicyclic epoxy compound having an alicyclic structure and two or more epoxy groups as functional groups in one molecule is preferred.

Examples of the polyfunctional alicyclic epoxy compounds specifically include:
(i) a compound having an epoxy group constituted of two adjacent carbon atoms and an oxygen atom that constitute an alicyclic ring (i.e., an alicyclic epoxy group);
(ii) a compound having an epoxy group directly bonded to an alicyclic ring with a single bond; and
(iii) a compound having an alicyclic ring and a glycidyl group.

An example of the above compound (i) having an alicyclic epoxy group includes a compound represented by Formula (i) below.

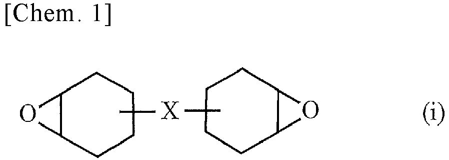

In Formula (i) above, X represents a single bond or a linking group (a divalent group having one or more atoms). Examples of the linking group include a divalent hydrocarbon group, an alkenylene group in which some or all of the carbon-carbon double bonds are epoxidized, a carbonyl group, an ether bond, an ester bond, a carbonate group, an amide group, and a group in which a plurality thereof are linked. Note that a substituent (for example, such as an alkyl group) may be bonded to a cyclohexene oxide group in Formula (i).

Examples of the divalent hydrocarbon group include a linear or branched alkylene group having from 1 to 18 carbons and a divalent alicyclic hydrocarbon group. Examples of the linear or branched alkylene group having from 1 to 18 carbons include a methylene group, a methyl methylene group, a dimethyl methylene group, an ethylene group, a propylene group, and a trimethylene group. Examples of the divalent alicyclic hydrocarbon group include a cycloalkylene group (including a cycloalkylidene group), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in the alkenylene group in which some or all of the carbon-carbon double bonds are epoxidized (which may be referred to as an "epoxidized alkenylene group") include a linear or branched alkenylene group having from 2 to 8 carbons, such as a vinylene group, a propenylene group, a 1-butenylene group, a 2-butenylene group, a butadienylene group, a pentenylene group, a hexenylene group, a heptenylene group, and an octenylene group. In particular, the epoxidized alkenylene group is preferably an alkenylene group in which all of the carbon-carbon double bonds are epoxidized, and more preferably an alkenylene group having from 2 to 4 carbons in which all of the carbon-carbon double bonds are epoxidized.

The linking group in the above X is, in particular, preferably a linking group containing an oxygen atom, and specifically, examples thereof include -CO-, -O-CO-O-, -COO-, -O-, -CONH-, and an epoxidized alkenylene group; a group in which a plurality of these groups are linked; and a group in which one or two or more of these groups and one or more of the divalent hydrocarbon groups are linked.

Representative examples of the compound represented by Formula (i) above include (3,4,3',4'-diepoxy)bicyclohexyl, bis(3,4-epoxycyclohexylmethyl)ether, 1,2-epoxy-1,2-bis(3,4-epoxycyclohexane-1-yl)ethane, 2,2-bis(3,4-epoxycyclohexane-1-yl)propane, 1,2-bis(3,4-epoxycyclohexane-1-yl)ethane, and compounds represented by Formulas (i-1) to (i-10) below. L in Formula (i-5) below is an alkylene group having from 1 to 8 carbons, and, among them, preferably a linear or branched alkylene group having from 1 to 3 carbons, such as a methylene group, an ethylene group, a propylene group, or an isopropylene group. In Formulas (i-5), (i-7), (i-9), and (i-10) below, n¹ to n⁸ each represent an integer from 1 to 30.

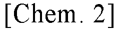

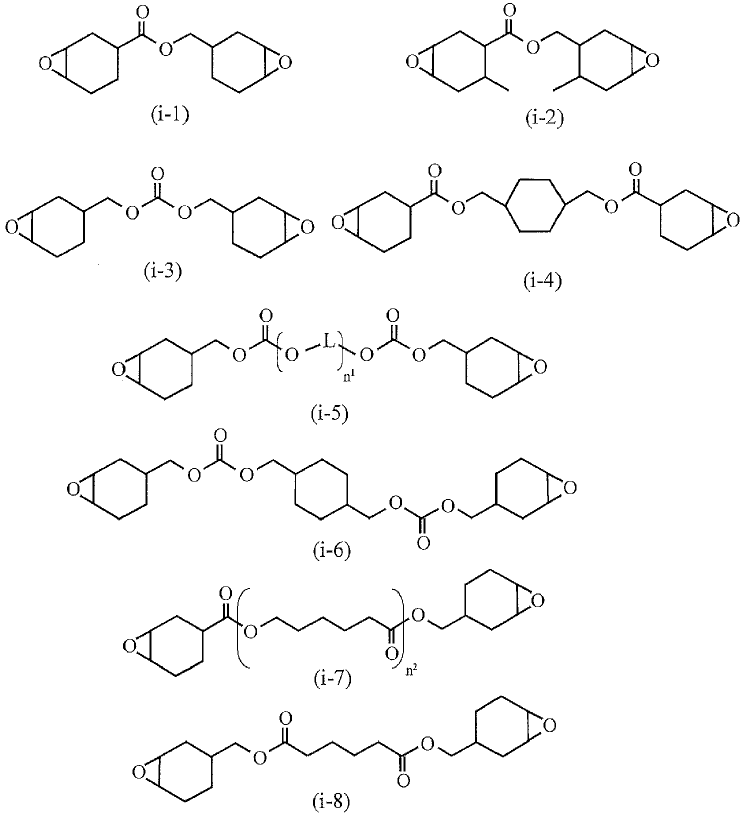

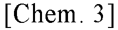

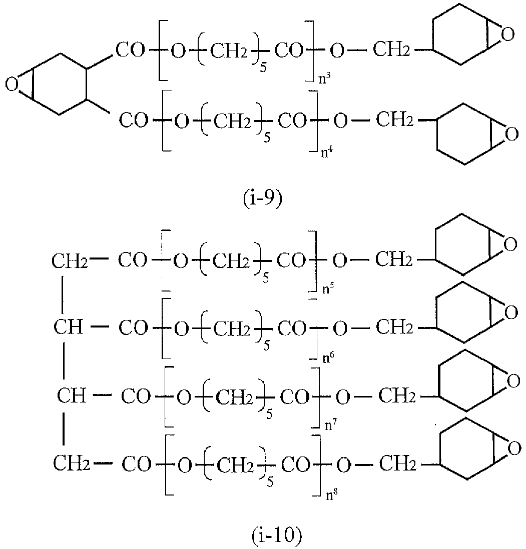

The above compound (i) having an alicyclic epoxy group also includes an epoxy-modified siloxane.

Examples of the epoxy-modified siloxane include a chain or cyclic polyorganosiloxane having a constituent unit represented by Formula (i') below.

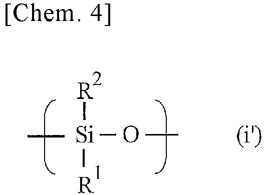

In Formula (i') above, R¹ represents a substituent containing an epoxy group represented by Formula (1a) or (1b) below, and R² represents an alkyl group or an alkoxy group.

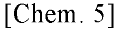

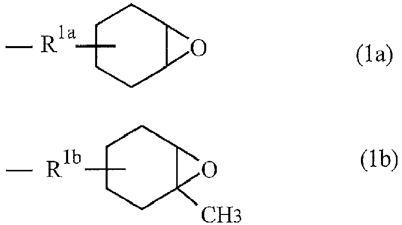

In the formulas, R^{1a} and R^{1b} are the same or different and represent a linear or branched alkylene group, and examples thereof include a linear or branched alkylene group having from 1 to 10 carbons, such as a methylene group, a methyl methylene group, a dimethyl methylene group, an ethylene group, a propylene group, a trimethylene group, a tetramethylene group, a pentamethylene group, a hexamethylene group, and a decamethylene group.

The epoxy equivalent (in accordance with JIS K7236) of the epoxy-modified siloxane is, for example, from 100 to 400 and preferably from 150 to 300.

As the epoxy-modified siloxane, for example, commercially available products can be used, for example, such as an epoxy-modified cyclic polyorganosiloxane represented by Formula (i'-1) below (trade name "X-40-2670", available from Shin-Etsu Chemical Co., Ltd.).

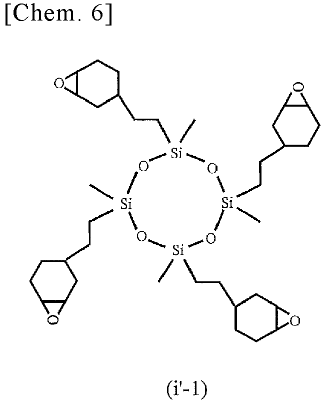

Examples of the above compound (ii) having an epoxy group directly bonded to an alicyclic ring with a single bond include a compound represented by Formula (ii) below.

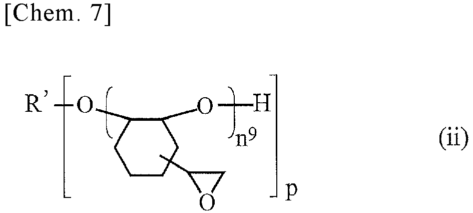

In Formula (ii), R' is a group resulting from elimination of p hydroxyl groups (-OH) from a structural formula of a p-hydric alcohol (p-valent organic group), wherein p and n⁹ each represent a natural number. Examples of the p-hydric alcohol [R'-(OH)ₚ] include polyhydric alcohols (alcohols having from 1 to 15 carbons), such as 2,2-bis(hydroxymethyl)-1-butanol. Here, p is preferably from 1 to 6, and n⁹ is preferably from 1 to 30. When p is 2 or greater, n⁹ in each group in square brackets (the outer brackets) may be the same or different. Examples of the compound represented by Formula (ii) above specifically include 1,2-epoxy-4-(2-oxiranyl)cyclohexane adduct of 2,2-bis(hydroxymethyl)-1-butanol [for example, such as the trade name "EHPE3150" (available from Daicel Corporation)].

Examples of the above compound (iii) having an alicyclic ring and a glycidyl group include hydrogenated aromatic glycidyl ether-based epoxy compounds, such as a hydrogenated bisphenol A epoxy compound, a hydrogenated bisphenol F epoxy compound, a hydrogenated biphenol epoxy compound, a hydrogenated phenol novolac epoxy compound, a hydrogenated cresol novolac epoxy compound, a hydrogenated cresol novolac epoxy compound of bisphenol A, a hydrogenated naphthalene epoxy compound, and a hydrogenated epoxy compound of an epoxy compound obtained from trisphenol methane.

The polyfunctional alicyclic epoxy compound is preferably the compound (i) having an alicyclic epoxy group and particularly preferably a compound represented by Formula (i) above (in particular, (3,4,3',4'-diepoxy)bicyclohexyl), in terms of providing a cured product having high surface hardness and excellent transparency.

The curable composition in an embodiment of the present invention may contain an additional curable compound in addition to the epoxy resin as the curable compound and can contain, for example, one type, or two or more types of cationic curable compounds, such as an oxetane compound and a vinyl ether compound.

A proportion of the epoxy resin in a total amount (100 wt.%) of the curable compound contained in the curable composition is, for example, 50 wt.% or greater, preferably 60 wt.% or greater, particularly preferably 70 wt.% or greater, and most preferably 80 wt.% or greater, and the upper limit is, for example, 100 wt.% and preferably 90 wt.%.

In addition, a proportion of the compound (i) having an alicyclic epoxy group in the total amount (100 wt.%) of the curable compound contained in the curable composition is, for example, 20 wt.% or greater, preferably 30 wt.% or greater, and particularly preferably 40 wt.% or greater, and the upper limit is, for example, 70 wt.% and preferably 60 wt.%.

A proportion of the compound represented by Formula (i) in the total amount (100 wt.%) of the curable compound contained in the curable composition is, for example, 10 wt.% or greater, preferably 15 wt.% or greater, and particularly preferably 20 wt.% or greater, and the upper limit is, for example, 50 wt.% and preferably 40 wt.%.

The curable composition preferably contains a photopolymerization initiator along with the curable compound and particularly preferably contains a photocationic polymerization initiator. The photocationic polymerization initiator is a compound that initiates curing reaction of the curable compound (in particular, the cationic curable compound) contained in the curable composition by generating an acid with light irradiation and is formed of a cationic moiety that absorbs light and an anionic moiety that serves as a source for generating the acid.

Examples of the photocationic polymerization initiator include diazonium salt-based compounds, iodonium salt-based compounds, sulfonium salt-based compounds, phosphonium salt-based compounds, selenium salt-based compounds, oxonium salt-based compounds, ammonium salt-based compounds, and bromine salt-based compounds.

In an embodiment of the present invention, among them, a sulfonium salt-based compound is preferably used in terms of being able to form a cured product with excellent curability. Examples of the cationic moiety of the sulfonium salt-based compound include arylsulfonium ions (in particular, triarylsulfonium ions), such as a (4-hydroxyphenyl)methylbenzylsulfonium ion, a triphenyl sulfonium ion, a diphenyl[4-(phenylthio)phenyl]sulfonium ion, a 4-(4-biphenylthio)phenyl-4-biphenylylphenylsulfonium ion, and a tri-p-tolylsulfonium ion.

Examples of the anionic moiety of the photocationic polymerization initiator include [(Y)ₛB(Phf)₄₋ₛ]⁻, wherein Y represents a phenyl group or a biphenylyl group, Phf represents a phenyl group in which at least one of hydrogen atoms is substituted with at least one substituent selected from a perfluoroalkyl group, a perfluoroalkoxy group, and a halogen atom, and s is an integer of 0 to 3; BF₄⁻; [(Rf)ₜPF₆₋ₜ]⁻, wherein Rf represents an alkyl group in which 80% or more of hydrogen atoms are substituted with fluorine atoms, and t represents an integer of 0 to 5; AsF₆⁻; SbF₆⁻; and SbF₅OH⁻.

Commercially available products can be used as the photocationic polymerization initiator in an embodiment of the present invention. Examples thereof include (4-hydroxyphenyl)methylbenzylsulfonium tetrakis(pentafluorophenyl)borate; 4-(4-biphenylylthio)phenyl-4-biphenylylphenylsulfonium tetrakis(pentafluorophenyl)borate; 4-(phenylthio)phenyldiphenylsulfonium phenyltris(pentafluorophenyl)borate; [4-(4-biphenylylthio)phenyl]-4-biphenylylphenylsulfonium phenyltris(pentafluorophenyl)borate; diphenyl[4-(phenylthio)phenyl]sulfonium tris(pentafluoroethyl)trifluorophosphate; diphenyl[4-(phenylthio)phenyl]sulfonium tetrakis(pentafluorophenyl)borate; diphenyl[4-(phenylthio)phenyl]sulfonium hexafluorophosphate; 4-(4-biphenylylthio)phenyl-4-biphenylylphenylsulfonium tris(pentafluoroethyl)trifluorophosphate; bis[4-(diphenylsulfonio)phenyl]sulfide phenyltris(pentafluorophenyl)borate; [4-(2-thioxanthonylthio)phenyl]phenyl-2-thioxanthonylsulfonium phenyltris(pentafluorophenyl)borate; 4-(phenylthio)phenyldiphenylsulfonium hexafluoroantimonate; the trade names "Cyracure UVI-6970", "Cyracure UVI-6974", "Cyracure UVI-6990", and "Cyracure UVI-950" (the above available from Union Carbide Corporation, USA); "Irgacure 250", "Irgacure 261", and "Irgacure 264" (the above available from BASF Corporation); "CG-24-61" (available from Ciba-Geigy Corporation); "Optomer SP-150", "Optomer SP-151", "Optomer SP-170", and "Optomer SP-171" (the above available from ADEKA Corporation); "DAICAT II" (available from Daicel Corporation); "UVAC 1590" and "UVAC 1591" (the above available from Daicel-Cytec Co., Ltd.); "CI-2064", "CI-2639", "CI-2624", "CI-2481", "CI-2734", "CI-2855", "CI-2823", "CI-2758", and "CIT-1682" (the above available from Nippon Soda Co., Ltd.); "PI-2074" (tetrakis(pentafluorophenyl)borate tolylcumyliodonium salt, available from Rhodia Japan Ltd.); "FFC509" (available from 3M Company); "BBI-102", "BBI-101", "BBI-103", "MPI-103", "TPS-103", "MDS-103", "DTS-103", "NAT-103", and "NDS-103" (the above available from Midori Kagaku Co., Ltd.); "CD-1010", "CD-1011", and "CD-1012" (the above available from Sartomer Co., Ltd., USA); and"CPI-100P" and "CPI-101A" (the above available from San-Apro Ltd.).

The content of the photopolymerization initiator is, for example, in a range from 0.1 to 5.0 parts by weight relative to 100 parts by weight of the curable compound (in particular, the cationic curable compound) contained in the curable composition. The content of the photopolymerization initiator less than the above range may cause curing failure. On the other hand, the content of the photopolymerization initiator greater than the above range tends to cause coloration of the cured product.

The curable composition in an embodiment of the present invention can be produced by mixing the curable compound, the photopolymerization initiator, and, as necessary, an additional component (for example, such as a solvent, an antioxidant, a surface conditioner, a photosensitizer, an anti-foaming agent, a leveling agent, a coupling agent, a surfactant, a flame retardant, an ultraviolet absorber, and a colorant). The additional component is blended in an amount of, for example, 20 wt.% or less, preferably 10 wt.% or less, and particularly preferably 5 wt.% or less of the total amount of the curable composition.

A commercially available products can also be used as the curable composition in an embodiment of the present invention, for example, such as trade name "CELVENUS OUH106" (available from Daicel Corporation).

As the mold, for example, a silicone mold can be used. The mold preferably has a plurality of inverted shapes (i.e., reversed concavo-convex shapes) of the lens (having, for example, 10 or more, preferably 20 or more, particularly preferably 30 or more, and most preferably 50 or more inverted concavo-convex shapes, and the upper limit of the number of the inverted concavo-convex shapes is, for example, 5000 and preferably 2000). Further, the arrangement (two-dimensional arrangement) of the inverted concavo-convex shapes of the lens in the mold is not particularly limited, but, among others, they are preferably arranged two-dimensionally at regular intervals in terms of being able to improve production efficiency. Furthermore, depending on the shape of the lens, a mold having a two-part configuration with an upper mold and a lower mold (for example, a two-part configuration with a mold having an inverted shape of the concave surface of the lens and a mold having an inverted shape of the convex surface of the lens, wherein one mold is an upper mold and the other is a lower mold) can be used.

A release agent may be coated to the surface of the mold. Examples of the release agent include fluorine-based release agents, silicone-based release agents, and wax-based release agents. One type alone or two or more types thereof in combination can be used.

Examples of the method for molding the curable composition using a mold include the methods (1) to (3) below.
(1) A method of coating the curable composition to a substrate, pressing a mold thereon, curing the curable composition, and then detaching the mold;
(2) A method of coating the curable composition to a mold, pressing a substrate from above, curing the curable composition, and then detaching the mold; and
(3) A method of coating the curable composition to at least one of an upper mold or a lower mold, combining the upper mold and the lower mold, curing the curable composition, and then detaching the upper mold and the lower mold.

A substrate having a light transmittance at a wavelength of 400 nm of 90% or higher is preferably used as the substrate, and a substrate made of quartz or glass can be suitably used. Further, the light transmittance at the wavelength is determined using a substrate (thickness: 1 mm) as a test piece and using a spectrophotometer to measure the light transmittance at the wavelength irradiated to the test piece.

Coating methods, such as a spray method, a spin coating method, and a screen printing method, can be used to coat the curable composition.

For example, when a photocurable composition is used as the curable composition, the curable composition can be cured by irradiating ultraviolet light thereto. Examples of the light source used to irradiate ultraviolet light include a high-pressure mercury lamp, an ultra-high-pressure mercury lamp, a carbon arc lamp, a xenon lamp, and a metal halide lamp. The irradiation time varies depending on the type of the light source, the distance between the light source and the coated surface, and other conditions, but is several tens of seconds at the longest. The illuminance is approximately from 5 to 200 mW. After the ultraviolet irradiation, the curable composition may be heated (post-curing) as necessary for facilitating curing.

### Examples

Hereinafter, the present invention will be described more specifically with reference to examples, but the present invention is not limited by these examples.

### Examples 1 to 4

A curable composition (trade name "CELVENUS OUH 106", available from Daicel Corporation, fracture strain of the cured product (measured using a test piece 5B mold in accordance with JIS-K7162: 1994): 0.8%) was coated on a silicone mold, and the mold was closed with a flat silicone mold from above. After the mold was closed, UV was irradiated (80 mW x 30 seconds), and then the mold was opened. An array of microlenses having a configuration wherein 100 microlenses are arranged in 10 lengthwise rows x 10 crosswise rows, and these microlenses are connected each other via a junction was obtained.

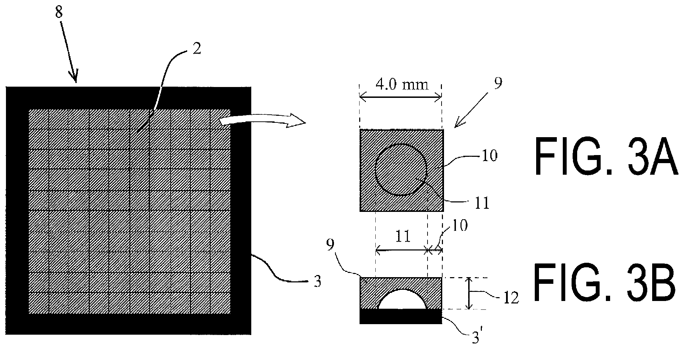

The resulting array of microlenses was adhered to the support tape described in Table 1 below, and lattice-shaped cuts formed of 11 lengthwise cuts and 11 crosswise cuts, each reaching the support tape, were made at the junction (thickness: 0.3 mm) of the array of microlenses by the cutting method below using a blade. Thereby 100 individualized pieces (including the microlens concave portion and the peripheral portion) with a side length of 4.0 mm were obtained (FIG. 3). The resulting 100 individualized pieces were visually observed for appearance, and the number of pieces without adhesion of dirt was counted for evaluating prevention rate of adhesion of cut chips.

### Cutting method

The cutting was performed in two stages.

That is, in the first stage, the cutting was finished in a state where an uncut portion (a portion to be cut) was left in the thickness direction of the junction, and in the second stage, the uncut portion (the portion to be cut) was completely cut. Note that the time from the end of the cutting at the specific cutting site in the first stage to the start of the cutting in the second stage was 25 seconds.

### [Table 1]

**Table 1**

| | | Cutting (first stage) | | | | Cutting (second stage) | | | Prevention rate of adhesion of cut chips (%) |
|---|---|---|---|---|---|---|---|---|---|
| | Support tape | Rotation speed (number of rpm) | Cutting speed (mm/s) | Thickness of the uncut portion (µm) | Cutting depth (%) | Rotation speed (number of rpm) | Cutting speed (mm/s) | Cutting amount in support tape (µm) | |
| Example 1 | 1 | 12000 | 50 | 10 | 96.7 | 12000 | 50 | 25 | 84 |
| Example 2 | 2 | 12000 | 50 | 10 | 96.7 | 12000 | 50 | 25 | 61 |
| Example 3 | 2 | 30000 | 100 | 20 | 93.3 | 30000 | 100 | 10 | 88 |
| Example 4 | 2 | 30000 | 100 | 20 | 93.3 | 30000 | 100 | 25 | 87 |

### Comparative Examples 1 to 10

An array of microlenses obtained in the same manner as in the examples was adhered to the support tape described in Table 2 below and was cut at the junction using a blade in one stage under the conditions described in Table 2 below. Thereby 100 individualized pieces (including the microlens concave portion and the peripheral portion) with a side length of 4.0 mm were obtained. The resulting individualized pieces were evaluated in the same manner as in the examples for effect of suppressing the adhesion of cut chips.

### [Table 2]

**Table 2**

| | Support tape | Cutting (in one stage) | | | | Suppression rate of adhesion of cut chips (%) |
|---|---|---|---|---|---|---|
| | | Rotation speed (rpm) | Cutting speed (mm/s) | Cutting depth (%) | Cutting amount in support tape (µm) | |
| Comparative Example 1 | 1 | 12000 | 50 | 100 | 25 | 6 |
| Comparative Example 2 | 1 | 12000 | 50 | 100 | 15 | 22 |
| Comparative Example 3 | 1 | 12000 | 50 | 100 | 55 | 3 |
| Comparative Example 4 | 1 | 30000 | 50 | 100 | 25 | 2 |
| Comparative Example 5 | 1 | 6000 | 50 | 100 | 25 | 3 |
| Comparative Example 6 | 1 | 12000 | 100 | 100 | 25 | 4 |
| Comparative Example 7 | 1 | 12000 | 20 | 100 | 25 | 0 |
| Comparative Example 8 | 3 | 12000 | 50 | 100 | 25 | 15 |
| Comparative Example 9 | 4 | 12000 | 50 | 100 | 25 | 2 |
| Comparative Example 10 | 2 | 12000 | 50 | 100 | 25 | 26 |

### Support tape

- Tape (1): UV curable dicing tape, available from Lintec Corporation, trade name "ADWILL-D-485 H", adhesive layer thickness 5 µm, adhesive force 4.9 N/25 mm
- Tape (2): UV curable dicing tape, available from Lintec Corporation, trade name "ADWILL-D-611", adhesive layer thickness 15 µm, adhesive force 12.3 N/25 mm
- Tape (3): UV curable dicing tape, available from Denka Adtecs Co., Ltd., trade name "UHP-1515MCE", adhesive layer thickness 15 µm, adhesive force 10.2 N/25 mm
- Tape (4): UV curable dicing tape, available from Denka Adtecs Co., Ltd., trade name "UHP-1510M4", adhesive layer thickness 10 µm, adhesive force 12.5 N/25 mm

To summarize the above, configurations according to an embodiment of the present invention and variations thereof will be described below.
(1) A method for producing a lens, the method including cutting an array of lenses at a junction by a method below, the array of lenses being fixed on a support tape and having a configuration wherein two or more lenses are two-dimensionally arranged, and these lenses are connected each other via the junction;
   Cutting method: advancing a cutting depth from the side opposite to the side adhered to the support tape to a range of 50% or greater and 99.9% or less of a thickness of the junction, temporarily stopping the advance of the cutting depth when the advance reaches the range, and then cutting the junction to a cutting depth of 100%.
(2) The method for producing a lens according to (1), wherein the array of lenses is cut while being water-cooled.
(3) The method for producing a lens according to (1) or (2), wherein the array of lenses is adhered to the support tape at the junction of the lenses; a diameter of the lens is from 1 to 5 mm; and a width of the junction is 1 mm or less.
(4) The method for producing a lens according to any one of (1) to (3), wherein the support tape has an adhesive force of 3 to 20 N/25 mm, and the adhesive force is reduced or eliminated by applying ultraviolet irradiation or heat treatment.
(5) The method for producing a lens according to any one of (1) to (4), wherein the array of lenses is cut using a blade rotating at high speed.
(6) The method for producing a lens according to any one of (1) to (5), wherein a curable composition is molded using a mold and then cured to obtain an array of lenses formed of a cured product of the curable composition, and the resulting array of lenses is fixed on the support tape and cut.
(7) The method for producing a lens according to (6), wherein the curable composition contains a cationic curable compound.
(8) The method for producing a lens according to (6), wherein the curable composition contains an epoxy resin.
(9) The method for producing a lens according to (6), wherein the curable composition contains a compound having an alicyclic epoxy group.
(10) The method for producing a lens according to (6), wherein the curable composition contains a polyfunctional alicyclic epoxy compound.
(11) The method for producing a lens according to (6), wherein the curable composition contains a compound represented by Formula (i).
(12) The method for producing a lens according to (6), wherein the curable composition contains at least one compound selected from 3,4-epoxycyclohexylmethyl(3,4-epoxy)cyclohexanecarboxylate, (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.
(13) The method for producing a lens according to (6), wherein the curable composition contains at least one type selected from (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.
(14) The method for producing a lens according to (6), wherein the curable composition contains an epoxy resin (preferably a compound having an alicyclic epoxy group and particularly preferably a polyfunctional alicyclic epoxy compound), and the proportion of the epoxy resin (preferably a compound having an alicyclic epoxy group and particularly preferably a polyfunctional alicyclic epoxy compound) in a total amount of the curable compound contained in the curable composition is 20 wt.% or greater (preferably 30 wt.% or greater and particularly preferably 40 wt.% or greater, and the upper limit is 70 wt.% and preferably 60 wt.%).
(15) The method for producing a lens according to (6), wherein the curable composition contains a compound represented by Formula (i), and a proportion of the compound represented by Formula (i) above in the total amount of the curable compound contained in the curable composition is 10 wt.% or greater (preferably 15 wt.% or greater and particularly preferably 20 wt.% or greater).
(16) The method for producing a lens according to any one of (1) to (15), wherein a fracture strain of the array of lenses according to a method in accordance with JIS-K7162: 1994 is from 0.1 to 30%.
(17) The method for producing a lens according to any one of (1) to (16), wherein the lens is a microlens, a Fresnel lens, a molded product formed of a plurality of microlenses or Fresnel lenses bonded via a junction, a lenticular lens, or a prism sheet.

### Industrial Applicability

According to the producing method of the present invention, a small thin lens with excellent optical properties can be produced accurately and efficiently. Thus, the method for producing a lens according to the present invention is suitable as a method for producing a lens for a sensor of a mobile electronic device, such as a mobile phone and a smartphone; and a lens for a camera.

### Reference Signs List

1 Blade rotating at high speed
2 Array of lenses
3 Support tape
3' Support tape cut to size of lens
4 Floating between lens and support tape
5 Lens concave portion in array of lenses
6 Junction of array of lenses
7 Thickness of junction of array of lenses
8 Array of microlenses fixed on support tape
9 Individualized piece obtained from array of lenses
10 Lens peripheral portion
11 Lens concave portion
12 Thickness of junction

## Claims

1. A method for producing a lens, the method comprising cutting an array of lenses at a junction by a method below, the array of lenses being fixed on a support tape and having a configuration wherein two or more lenses are two-dimensionally arranged, and these lenses are connected each other via the junction;
Cutting method: advancing a cutting depth from the side opposite to the side adhered to the support tape to a range from 50% or greater and 99.9% or less of a thickness of the junction, temporarily stopping the advance of the cutting depth when the advance reaches the range, and then cutting the junction to a cutting depth of 100%.

2. The method for producing a lens according to claim 1, wherein the array of lenses is cut while being water-cooled.

3. The method for producing a lens according to claim 1 or 2, wherein the array of lenses is adhered to the support tape at the junction of the lenses; a diameter of the lens is from 1 to 5 mm; and a width of the junction is 1 mm or less.

4. The method for producing a lens according to any one of claims 1 to 3, wherein the support tape has an adhesive force from 3 to 20 N/25 mm, and the adhesive force is reduced or eliminated by applying ultraviolet irradiation or heat treatment.

5. The method for producing a lens according to any one of claims 1 to 4, wherein the array of lenses is cut using a blade rotating at high speed.

6. The method for producing a lens according to any one of claims 1 to 5, wherein a curable composition is molded using a mold and then cured to obtain an array of lenses formed of a cured product of the curable composition, and the resulting array of lenses is fixed on the support tape and cut.

7. The method for producing a lens according to any one of claims 1 to 6, wherein a fracture strain (JIS-K7162: 1994) of the array of lenses is from 0.1 to 30%.

8. The method for producing a lens according to any one of claims 1 to 7, wherein the lens is a microlens, a Fresnel lens, a molded product formed of a plurality of microlenses or Fresnel lenses bonded via a junction, a lenticular lens, or a prism sheet.
